Europäisches Patentamt

European Patent Office

Office européen des brevets

(19)

(11) Numéro de publication: **0 207 115**
**B1**

(12) **FASCICULE DE BREVET EUROPEEN**

(45) Date de publication du fascicule du brevet: **31.10.90**

(51) Int. Cl.⁵: **G 06 K 19/06,** G 07 F 7/10

(21) Numéro de dépôt: **86900170.1**

(22) Date de dépôt: **27.12.85**

(86) Numéro de dépót international:
**PCT/FR85/00376**

(87) Numéro de publication internationale:
**WO 86/04170 17.07.86 Gazette 86/17**

(54) **PROCEDE POUR PERSONNALISER DES SUPPORTS PORTATIFS TELS QUE DES CARTES.**

(30) Priorité: **28.12.84 FR 8420027**

(43) Date de publication de la demande:
**07.01.87 Bulletin 87/02**

(45) Mention de la délivrance du brevet:
**31.10.90 Bulletin 90/44**

(84) Etats contractants désignés:
**BE DE FR GB IT NL SE**

(56) Documents cités:
**EP-A-0 018 889      FR-A-2 449 930**
**WO-A-82/01610     GB-A-2 033 299**
**DE-A-2 854 862      GB-A-20 916 38**
**FR-A-2 337 381      US-A-4 453 074**

**Onde Electrique,volume 64,no.1,janvier-février 1984,Paris (FR),L.Guillou:"Une nouvelle catégorie de cartes d'identification:les porte-clés de contrôle d'accès"pages 24-27,voir résumé,page 25,"la création,l'émission et la configuration",page 26:"la vie d'une carte porte-clés"**

(73) Titulaire: **BULL S.A.**
**121, Avenue de Malakoff**
**F-75116 Paris (FR)**

(72) Inventeur: **NONAT, Jean-Pierre**
**13, rue du Centre**
**F-78580 Maule (FR)**

# Description

La présente invention a pour objet un procédé pour personnaliser des supports portatifs tels que des cartes.

L'essor des cartes à pistes magnétiques et maintenant à microcircuits électroniques (microprocesseur et mémoire), impose une automatisation à la fabrication pour satisfaire les besoins d'un marché grand public.

D'une façon générale, il faut distinguer au moins deux stades préalables à la mise en circulation d'une carte: le stade de la fabrication et le stade de la personnalisation.

Le premier stade, effectué par le fabricant, consiste à équiper la carte de microcircuits électroniques constitués par exemple d'un microprocesseur et d'une mémoire programmable, et éventuellement d'une ou plusieurs pistes magnétiques.

Le second stade est généralement effectué par des organismes émetteurs habilités qui achètent les cartes ainsi fabriquées pour les diffuser à leurs futurs utilisateurs. Avant diffusion, ces organismes effectuent des opérations de personnalisation qui consistent à écrire dans la carte des informations pour identifier l'organisme émetteur et le futur utilisateur de cette carte, et pour fixer les conditions et les limites d'utilisation de la carte.

Ces informations der personnalisation sont écrites dans la mémoire des microcircuits électroniques de la carte, par estampage sur la carte, et éventuellement sur les pistes magnétiques.

Le brevet français no. 2 337 381, au nom de la demanderesse, décrit une telle carte, qui comporte plusieurs milieux de mémorisation de données ou d'informations. En effet, dans ce brevet, est décrite une carte sur le corps de laquelle des données ou informations peuvent être imprimées, ou inscrites par d'autres moyens, et qui comportent par ailleurs une piste magnétique et des circuits électroniques incorporant une mémoire. Cependant, ce brevet ne donne aucun renseignement sur la façon de réaliser la personnalisation de l'ensemble des milieux de mémorisation que le carte incorpore.

Par ailleurs, un article paru dans les pages 24 à 27 de la revue "L'onde électrique" de Janvier 1984, de même qu'un brevet américain no. 4 453 074, présente des cartes à mémoire électronique et certaines des informations de personnalisation qui peuvent se trouver dans les mémoires. Cependant, ces documents ne fournissent aucune information sur la façon de personnaliser les mémoires, et ils n'indiquent pas du tout qu'il possible que le support incorporant de telles mémoires puisse avoir différents milieux de mémorisation.

La demande de brevet anglais no. 2 091 638 présente un procédé pour personnaliser des cartes d'identification, en portant des informations sur une piste magnétique et des informations sur le corps de la carte. Le procédé décrit est contraignant car il impose que la piste magnétique, ou tout autre milieu de mémorisation dont le contenu pourrait être modifié (par exemple une mémoire électronique), soit personnalisée avant que des données soient inscrites sur le corps de la carte. En outre, le procédé décrit impose que les différents milieux de mémorisation d'une même carte soient remplis les uns après les autres, sans qu'il soit possible de commencer la personnalisation d'une première carte, puis de commencer la personnalisation d'une seconde carte, et ainsi de suite, avant de terminer la personnalisation de la première, puis la personnalisation de la seconde, etc.

L'invention concerne un procédé qui permet de concevoir ces opérations de personnalisation d'une façon automatique pour obtenir une cadence de production adaptée à un marché grand public, tout en offrant une grande souplesse d'utilisation, en ne présentant pas les inconvénients de la demande de brevet anglais précitée. Un but de l'invention est de permettre que n'importe quel milieu de mémorisation d'un support puisse être personnalisé en premier, sans qu'il soit forcément nécessaire de personnaliser immédiatement les autres milieux du même support, afin de permettre que les différents milieux soient éventuellement personnalisés par des organismes différents. Bien entendu, le procédé doit être particulièrement fiable et interdire tout risque d'erreur lors de la personnalisation c'est-à-dire interdire que des données ou informations soient mélangées.

L'invention a plus particulièrement pour objet un procédé pour personnaliser au moins un support portatif tel qu'une carte normalisée à microcircuits électroniques comportant au moins deux milieux de mémorisation de nature différente, du type consistant à inscrire dans chaque milieu des informations de personnalisation permettant à la fois d'identifier l'organisme émetteur des supports et leurs futurs utilisateurs, et de fixer les conditions et les limites d'utilisation de ces supports, caractérisé en ce qu'il consiste:

— à constituer un fichier central n groupes d'informations de personnalisation attribuables respectivement à n utilisateurs;

— à lire le premier groupe d'informations et l'associer à un premier support à personnaliser;

— à extraire de ce groupe les informations à inscrire dans l'un des milieux de mémorisation de ce premier support;

— à remplir ce milieu en y inscrivant lesdites informations;

— et en ce qu'il consiste, pour écrire les informations de chaque autre milieu d'un support, à relire les informations d'un milieu déjà rempli dudit support, à retrouver, dans le fichier central, à l'aide de ces informations relues, le groupe d'informations associé à ce support, à en extraire les informations à inscrire dans un autre milieu, et à inscrire lesdites informations extraites;

— et à recommencer pour les (n−1) autres groupes d'informations associés aux (n−1) autres supports.

D'autres caractéristiques avantages et détails ressortiront des revendications dépendantes et de la description explicative qui va suivre, faite en référence aux dessins annexés dans lesquels:

—les figures 1 et 2 illustrent schématiquement les caractéristiques d'une carte à laquelle s'applique le procédé conforme à l'invention,

—la figure 3 indique schématiquement le principe d'écriture d'informations d'identification dans la mémoire de la carte après sa fabrication,

—et la figure 4 illustre de façon schématique le procédé de personnalisation des cartes.

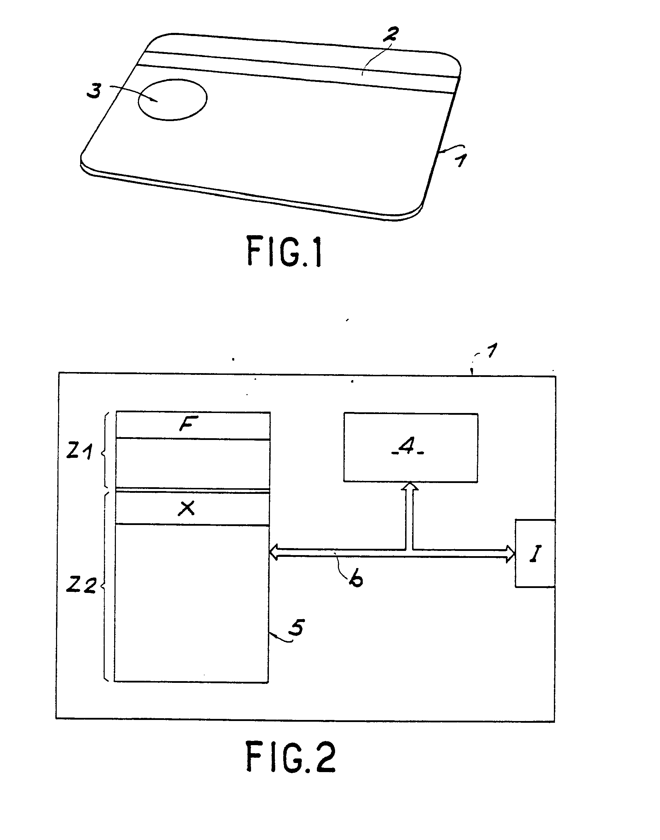

La carte (1), donnée à titre d'exemple à la figure 1, est une carte du type "mixte" qui comprend au moins une piste magnétique (2) et des microcircuits électroniques (3) constitués de circuits de traitement tels qu'un microprocesseur (4) et d'une mémoire programmable (5) comme schématisés à la figure 2. Ces circuits communiquent entre eux par un bus de liaison (b), et avec l'extérieur par une interface (I) telle que décrite par example dans le brevet français no. 2 483 713 de la demanderesse.

Cette mémoire (5) comprend au moins une zone de mémoire (Z1) ou zone secrète où les informations enregistrées ne sont accessibles qu'en interne par le microprocesseur (4). Les autres informations sont enregistrées dans une seconde zone de mémoire (Z2) avec accès en lecture/écriture interne et/ou externe qui sont déterminés en fonction des applications envisagées pour la carte (1).

La structure d'une telle carte, notamment au niveau des microcircuits électroniques, est décrite en détail dans les brevets français no. 2 337 381, 2 401 459 et 2 461 301 de la demanderesse.

Le procédé conforme à l'invention intervient après la fabrication de la carte, c'est-à-dire une fois la bande magnétique (2) apposée sur la carte (1) et le microprocesseur (4) et la mémoire (5) implantés dans la carte (1).

La carte (1), issue de cette fabrication, ne possède aucune information enregistrée sur la piste magnétique (2) et ne présente aucun estampage. Par contre et à titre d'exemple, deux informations d'identification, différentes pour chaque carte, sont enregistrées par le fabricant dans la mémoire programmable (5):

—un numéro de série ou de fabrication (X),

—et une clé de fabrication (F) propre à chaque carte, qui est par exemple calculée à partir du numéro de fabrication (X) et d'une donnée secrète (s).

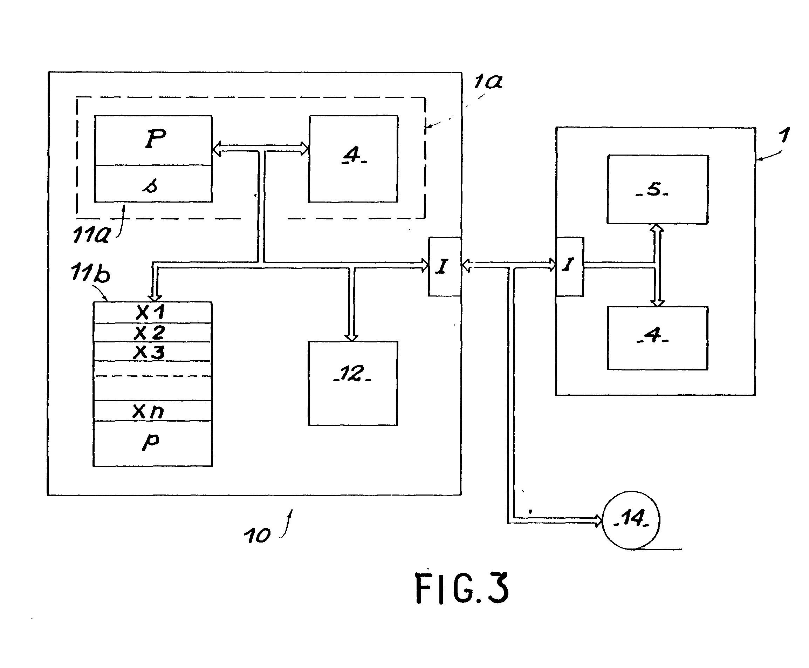

Un exemple de calcul d'une clé de fabrication (F) est illustré à la figure 3.

Le fabricant est équipé d'un système (10) comprenant au moins un ensemble mémoire (11a, 11b) et des circuits de traitement (12).

Dans la première zone de mémoire (11a) sont enregistrés un algorithme (P) de calcul des clés de fabrication (F) et la donnée secrète (s). Dans la zone de mémoire (11b) sont enregistrés une succession de numéros de fabrication (X1, X2, . . . Xn) lus par exemple à partir d'une bande magnétique (14) préalablement constituée par le fabricant.

Pour identifier *n* cartes, le fabricant connecte successivement ces *n* cartes au système (10) pour faire inscrire dans la mémoire (5) de chacune d'elle un numéro de fabrication (X) et une clé de fabrication (F). La première carte (1) connectée au système (10) se voit attribuer par exemple le numéro de série X1 et une clé de fabrication (F1) résultant de l'exécution de l'algorithme (P) par les circuits de traitement (12) et telle que:

$$F1 = P(X1, s)$$

Les circuits de traitement (12), commandés par un programme d'écriture (p) enregistré dans la zone de mémoire (11b), écrivent le numéro de série (X1) dans la zone de mémoire (Z2) et la clé de fabrication (F1) dans la zone de mémoire secrète (Z1) de la mémoire (5) de la carte (1).

Pour augmenter le degré de sécurité, la donnée secrète (s), commune pour les *n* cartes, est changée régulièrement. Avantageusement, la zone de mémoire (11a) fait partie d'une carte (1a) du type précité avec calcul de la clé de fabrication (F1) par le microprocesseur (4) de la carte (1a).

Une fois cette phase de fabrication effectuée par le fabricant, des organismes émetteurs habilités achètent les cartes et exécutent, avant diffusion à leurs utilisateurs, des opérations de personnalisation. Ces opérations de personnalisation consistent à écrire dans chaque carte des informations propres à l'organisme émetteur et au futur utilisateur qui pourra ensuite obtenir les prestations de cet organisme dans des conditions et limites d'utilisation déterminées par ces informations.

Ces opérations de personnalisation sont essentiellement au nombre de trois pour une carte mixte:

—encodage de la piste magnétique (2),

—estampage de la carte (1), c'est-à-dire procéder à une écriture visible sur la carte qui permette une identification visuelle de la carte, ce procédé pouvant se faire soit par estampage, soit par une écriture à plat,

—et encodage de la mémoire (5).

Ces opérations consistent essentiellement à écrire des informations à partir d'un fichier central préalablement constitué et continuellement mis à jour par chaque organisme émetteur. Ce fichier central, par exemple enregistré sur bande magnétique, contient *n* groupes d'informations. Ces *n* groupes vont être respectivement attribués aux *n* futurs utilisateurs qui sont identifiés après avoir fait une demande auprès de cet organisme émetteur.

Un exemple d'un tel fichier est donné dans le tableau ci-dessous limité à trois groupes d'informations qui correspondent à une application bancaire.

| groupe 1 | groupe 2 | groupe 3 |
|----------|----------|----------|
| NOM1 | NOM2 | NOM3 |
| PRENOM1 | PRENOM2 | PRENOM3 |
| No. ISO1 | No. ISO2 | No. ISO3 |
| RIB1 | RIB2 | RIB3 |
| DATE1 | DATE1 | DATE3 |
| PIN1 | PIN2 | PIN3 |
| S1 | S1 | S1 |
| S | S | S |
| DONNEES1 | DONNEES2 | DONNEES3 |

En prenant comme exemple le groupe 1, certaines informations du groupe personnalisent le futur utilisateur à savoir: son nom (NOM1), son prénom (PRENOM1) et son code d'identification personnel (PIN1) qui lui permettra d'être reconnu par la carte.

Certaines informations personnalisent à la fois l'organisme émetteur, en l'occurrence une banque dans notre exemple, et chaque futur utilisateur: le numéro ISO (No. ISO1) la clé RIB (RIB1). Les informations (S1, S) sont des codes secrets spécifiques de l'organisme émetteur, le code secret (S1) étant le code secret (S) brouillé.

Enfin, l'information (DATE1) indique la durée de validité de la carte qui est déterminée par l'organisme émetteur.

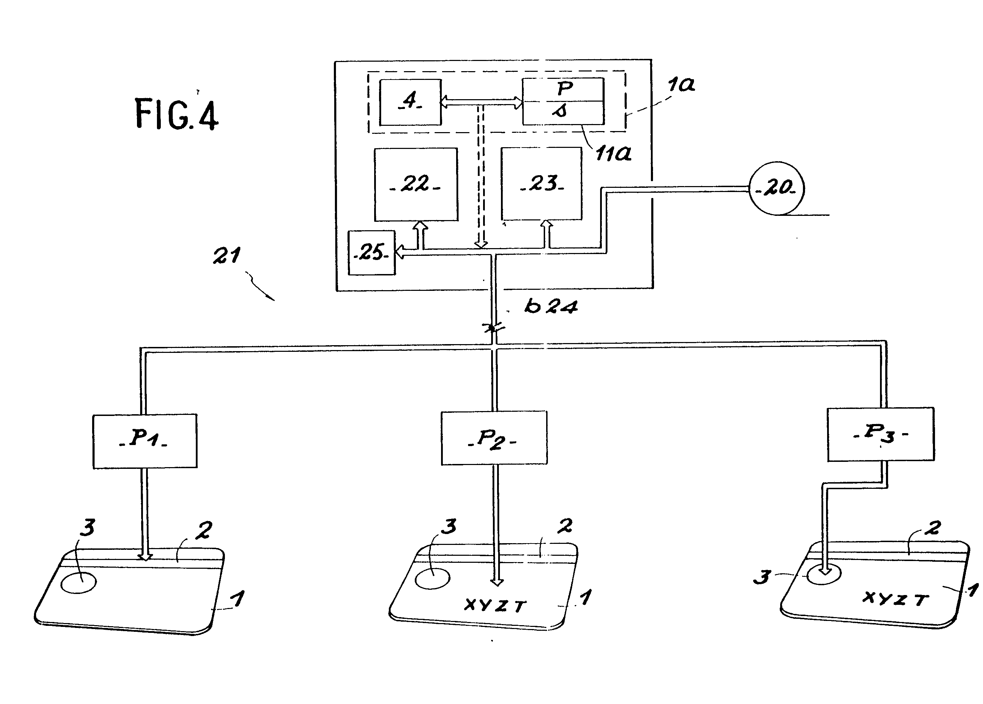

Une chaîne de personnalisation est schématisée à la figure 4.

L'organisme émetteur des cartes (1) constitue un fichier à partir des demandes des utilisateurs. A chaque utilisateur est associé un groupe d'informations. Ce fichier est par exemple préenregistré sur une bande magnétique (20).

L'organisme émetteur dispose d'un système de personnalisation (21) comprenant une mémoire (22) et des circuits de traitement (23). Ce système est relié, à distance ou non, par un bus de liaison (b24), à trois postes de travail (P1, P2, P3) chargés de réaliser respectivement les trois opérations de personnalisation précitées.

Le poste de travail (P1) comprend essentiellement une tête magnétique de lecture/écriture connue en soi.

Le poste de travail (P2) comprend essentiellement et à titre d'exemple un dispositif d'estampage connu en soi.

Le poste de travail (P3) comprend essentiellement une tête de lecture/écriture, connue en soi, qui est abaissée pour venir en contact électrique avec les bornes de sortie des microcircuits (3) de la carte.

Selon un premier mode de réalisation, les opérations de personnalisation se déroulent dans l'ordre suivant: encodage de la piste magnétique (2), écriture sur la carte par exemple par estampage et encodage de la mémoire (5).

Dans une première variante, les opérations de personnalisation précitées se déroulent successivement et en continu selon le schéma de la chaîne de personnalisation de la figure 4. Cette chaîne est alors constituée par une seule et même machine (21).

Pour la première opération de personnalisation, il n'y a pas à attribuer un groupe d'informations particulier à une carte particulière. D'une façon tout à fait logique, les trois cartes à personnaliser se verront respectivement attribuer les groupes d'informations (1, 2, 3). Ces trois groupes d'informations constituant le fichier de l'organisme émetteur sont préenregistrés sur la bande magnétique (20), puis transférés dans la mémoire (22) du système (21).

L'opération d'encodage de la piste magnétique (2) de la première carte (1) consiste à lire dans la mémoire (22) le groupe d'informations (1) et d'en extraire, à titre d'exemple, les informations suivantes pour les écrire sur la piste magnétique (2) (poste de travail P1):

—No. ISO1,
—RIB1,
—DATE1,
—et S1.

Une fois ces informations écrites, elles sont relues pour vérification. En cas d'erreur, les opérations d'écriture sont recommencées, avec éventuellement rejet de la carte en cas d'anomalie.

Avantageusement, le groupe d'informations (1) lu à partir de la mémoire (22) est stocké temporairement dans une mémoire tampon (25) du système de personnalisation (21).

Pour la seconde opération ou opération d'estampage (poste de travail P2), il suffit d'extraire de la mémoire tampon (25) les informations à estamper sans rentrer à nouveau dans la mémoire (22). A titre d'exemple, les informations extraites pour l'estampage sont: NOM, PRENOM, numéro ISO et DATE.

Enfin, la dernière opération concerne l'encodage de la mémoire (5) de la carte (1). Cette dernière opération est précédée d'une opération de vérification de la clé de fabrication (F) inscrite préalablement par le fabricant. Cette clé (F) sert à protéger la carte pendant son transit entre le fabricant et l'utilisateur et seule la connaissance de cette clé (F) permet d'écrire des informations de personnalisation dans la mémoire (5) de la carte (1).

Cette opération de vérification consiste, pour chaque carte (1), à relire le numéro de fabrication (X), à recalculer la clé de fabrication (F) correspondante, puis à vérifier que cette clé est bien égale à celle enregistrée dans la zone de mémoire (Z1) de la mémoire (5). Bien entendu, l'opération de comparaison est effectuée par la carte elle-même, puisque la zone de mémoire (Z1) n'est accessible qu'en interne.

Le clé (F) est recalculée par les circuits de traitement (23) à partir de l'algorithme (P) et de la donnée secrète (s) préenregistrés dans la mémoire (22). Avantageusement, celle clé (F) est recalculée par les circuits de traitement (4) de la carte (1a) précitée (figure 3) et dont la mémoire (11a) contient l'algorithme (P) et la donnée secrète (s). Cette carte (1a) est connectée au système de personnalisation (21). Une même carte (1a) est donc utilisée par le fabricant et par l'organisme émetteur des cartes (1).

Une fois cette opération de vérification effectuée, on réalise l'encodage de la mémoire (5) au poste de travail (P3).

Pour cela, il suffit de relire la mémoire tampon (25) pour en extraire par exemple toutes les informations relatives au groupe (1) (excepté le code secret brouillé S1 uniquement utilisé pour la piste magnétique) et les écrire dans des zones correspondantes de la mémoire (5), avec notamment le PIN et le code secret (S) qui sont inscrits dans la zone de mémoire secrète (Z1).

Dans une seconde variante du premier mode de réalisation, les opérations de personnalisation s'effectuent dans le même ordre, mais l'opération d'encodage de la mémoire (5) est effectuée par une autre machine. Autrement dit, la chaîne de personnalisation est constituée par deux systèmes (21), le deuxième système ne comprenant pas les postes de travail (P1, P2).

Dans ce cas l'opération d'encodage de la mémoire (5) s'effectue en deux phases. Une foids le fichier de la bande magnétique (20) transféré dans la mémoire (22) du deuxième système de personnalisation (21), la première phase consiste à relire la piste magnétique (2) ou l'estampage de la carte à traiter afin d'en extraire une information permettant de retrouver dans la mémoire (22) le groupe d'informations qui a été attribué à cette carte au cours des opérations de personnalisation précédentes. Cette information est par exemple le numéro ISO. Une fois le groupe identifié, la deuxième phase consiste à écrire par exemple toutes les informations du groupe dans des zones correspondantes de la mémoire (5), avec notamment le PIN et le code secret (S) inscrits dans la zone de mémoire secrète (Z1).

On procède d'une façon identique pour les groupes d'informations (2, 3) respectivement attribués aux deux autres cartes, suivant la première ou seconde variante de ce premier mode de réalisation.

Selon un second mode de réalisation, les opérations de personnalisation se déroulent dans l'ordre suivant: encodage de la mémoire (5) de la carte (1), encodage de la piste magnétique (2) et estampage.

Selon une première variante, les opérations de personnalisation précitées se déroulent successivement et en continu selon le schéma de la chaîne de personnalisation de la figure 4, mais avec les postes de travail dans l'ordre suivant P3, P1 et P2.

Comme dans le premier mode de réalisation, la première opération pour l'encodage de la mémoire (5) consiste, pour chaque carte (1), à relire le numéro de fabrication (X) et à recalculer la clé de fabrication (F) correspondante, puis à vérifier que cette clé est bien égale à celle enregistrée dans la zone de mémoire (Z1) de la mémoire (5).

Une fois cette opération de vérification effectuée, on réalise l'encodage de la mémoire (5) de chaque carte.

La première phase consiste à transférer le fichier de la bande magnétique (20) dans la mémoire (22) du système (21) et à attribuer le groupe d'informations (1) à la première carte à traiter, le groupe d'informations (2) à la seconde carte, et ainsi de suite.

Dans une seconde phase toutes les informations du groupe correspondant stockées dans la mémoire tampon (25) sont par exemple écrites dans des zones correspondantes de la mémoire (5), avec notamment le PIN et le code secret (S) inscrits dans la zone de mémoire secrète (Z1).

La seconde opération consiste à encoder la piste magnétique (2) des cartes (1) en prélevant de la mémoire tampon (25) qui contient le premier groupe d'informations (1), les informations à écrire sur la piste magnétique (2).

Enfin, la troisième opération ou opération d'estampage est réalisée comme dans le mode de réalisation précédent.

Dans une seconde variante du second mode de réalisation, les opérations der personnalisation s'effectuent dans le même ordre, mais les opérations d'encodage de la piste magnétique et d'estampage sont effectuées par une autre machine équipée d'un système de personnalisation (21) du type précité mais ne comprenant pas le poste de travail (P3).

Une fois le fichier de la bande magnétique (20) transféré dans la mémoire (22) du système (21), l'encodage de la piste magnétique (2) s'effectue en deux phases.

La première phase consiste à relire au moins une information de la mémoire (5) de la carte à traiter et à retrouver par cette information le groupe d'informations précédemment attribué à cette carte lors de l'opération d'encodage de la mémoire effectuée précédemment. Cette information est par exemple le numéro ISO. Une fois le groupe identifié, la deuxième phase consiste à écrire certaines informations du groupe sur la piste magnétique (2). A titre d'exemple, les informations écrites sont les suivantes: ISO1 RIB1, DATE1, et S1 comme dans le mode de réalisation précédent.

Enfin, la troisième opération ou opération d'estampage est réalisée ensuite comme dans le mode de réalisation précédent.

Selon un troisième mode de réalisation, il est possible d'envisager l'opération d'estampage avant les opérations d'encodage de la piste magnétique (2) et de la mémoire (5). Dans ce cas, il faut relire une information estampée sur la carte pour retrouver dans le fichier central le groupe d'informations attribué à cette carte. Bien que cela soit envisageable, il est cependant plus facile de relire la piste magnétique (2) ou la mémoire (5), de sorte que les deux modes de réalisation précédemment décrits sont plus adaptés à une meilleure industrialisation. Dans ce troisième mode de réalisation, il est possible d'envisager, après l'estampage, l'opération d'encodage de la piste magnétique puis l'opération d'encodage de la mémoire ou inversement, ces deux opérations étant effectuées sur une même machine ou non suivant les mêmes principes que ceux décrits pour les deux premiers modes de réalisation.

Bien entendu, les opérations de personnalisation ne sont pas limitées à l'écriture d'informations sur une piste magnétique ou dans une mémoire et à effectuer un estampage sur la carte. A titre d'exemple, le procédé conforme à l'invention peut envisager l'apposition de la photographie du futur utilisateur sur la carte. Cette photographie peut être enregistrée de façon numérique et être incluse dans les DONNEES de chaque groupe d'informations qui identifie ou personnalise le futur utilisateur de la carte. Il est également possible d'écrire des informations par un procédé optique, par exemple par laser, sur une surface prétraitée de la carte.

En variante, le procédé conforme à l'invention peut également s'appliquer à une carte équipée de microcircuits électroniques, mais ne possédant pas de piste magnétique (2). Dans ce cas, le procédé se limite à l'encodage de la mémoire (5) et à écrire sur la carte par exemple par estampage. Avantageusement, on procède tout d'abord à l'encodage de la mémoire (5), puis on effectue l'estampage selon le même principe que celui décrit dans le second mode de réalisation.

Les opérations de personnalisation sont précédées d'opérations de test de fin de fabrication qui permettent de s'assurer du bon état de fonctionnement de tous les éléments de la carte. Ces opérations consistent essentiellement à écrire et à relire au moins une information dans la mémoire des microcircuits électroniques et sur la piste magnétique.

Enfin, il est possible intégrer dans la chaîne de personnalisation l'opération initiale qui consiste à écrire dans chaque carte le numéro de série (X) et la clé de fabrication (F) comme décrit en référence à la figure 3. Cela peut être le cas lorsque le fabricant est aussi l'organisme émetteur des cartes. Bien entendu, le numéro de série (X) et la clé de fabrication (F) donnés à titre d'exemple peuvent être remplacées par des informations ou paramètres ayant des significations différentes.

## Revendications

1. Procédé pour personnaliser au moins un support portatif, tel qu'une carte normalisée à microcircuits électroniques comportant au moins deux milieux de mémorisation de nature différente, du type consistant à inscrire dans chaque milieu des informations de personnalisation permettant à la fois d'identifier l'organisme émetteur des supports et leurs futurs utilisateurs, et de fixer les conditions et les limites d'utilisation de ces supports, caractérisé en ce qu'il consiste:

— à constituer un fichier central regroupant n groupes d'informations de personnalisation attribuables respectivement à n utilisateurs;

— à lire le premier groupe d'informations et à l'associer à un premier support à personnaliser;

— à extraire de ce groupe les informations à inscrire dans l'une des milieux de mémorisation de ce premier support;

— à remplir ce milieu en y inscrivant lesdites informations;

— et en ce qu'il consiste, pour écrire les informations de chaque autre milieu d'un support, à relire les informations d'un milieu déjà rempli dudit support, à retrouver, dans le fichier central, à l'aide de ces informations relues, le groupe d'informations associé à ce support, à en extraire les informations à inscrire dans un autre milieu et à inscrire lesdites informations extraites;

— et à recommencer pour les (n−1) autres groupes d'informations associés aux (n−1) autres supports.

2. Procédé selon la revendication 1, caractérisé en ce qu'il consiste à personnaliser la totalité d'un support, en remplissant chacun des milieux de mémorisation qu'il comporte, avant de passer à la personnalisation d'un autre support.

3. Procédé selon la revendication 1, caractérisé en ce qu'il consiste à remplir un premier milieu de chacun des n supports, puis un second milieu de chacun des n supports, et ainsi de suite jusqu'à ce que tous les milieux de chaque support soient remplis avec les informations qu'ils doivent contenir.

4. Procédé selon l'une quelconque des revendications 1 à 3, caractérisé en ce qu'il est mis en oeuvre à l'aide d'une machine unique comportant un nombre de postes de travail correspondant au nombre de milieux de mémorisation de chaque support.

5. Procédé selon l'une des revendications 1 à 3, caractérisé en ce qu'il est mis en oeuvre à l'aide de plusieurs machines.

6. Procédé selon l'une quelconque des revendications 1 à 5, caractérisé en ce que l'un des milieux de mémorisation est une mémoire (5) électronique.

7. Procédé selon la revendication 6, caractérisé en ce que la mémoire (5) est associée à des circuits de traitement (4) incorporés sur le support.

8. Procédé selon l'une quelconque des revendications 1 à 5, caractérisé en ce que l'un des milieux de mémorisation est une piste magnétique (2).

9. Procédé selon l'une quelconque des revendications 1 à 5, caractérisé en ce que l'un des milieux de mémorisation est le corps (1) de la carte, sur lequel les informations de personnalisation qui lui sont destinées sont inscrites par estampage et/ou par impression.

10. Procédé selon l'une quelconque des revendications 1 à 5, caractérisé en ce que l'un des milieux de mémorisation est une surface prétraitée du corps (1) de la carte, sur laquelle les informations qui lui destinées sont inscrites par un procédé optique.

11. Procédé selon l'un des revendications 6 ou 7, caractérisé en ce qu'un numéro de série ou de fabrication (X) est inscrit lors de la fabrication de chaque support, dans une première zone (Z2) de la mémoire (5) électronique, et ce qu'une clé secrète de fabrication (F) est calculée à partir du numéro de série, de façon à être spécifique à chaque support, et est inscrite dans une zone secrète (Z1) de la mémoire (5), et en ce que, avant d'inscrire les données de personnalisation de la mémoire électronique, un calcul est effectué prenant en compte les mêmes paramètres que ceux utilisés pour le calcul de la clé de fabrication (F) et ce que le résultat de ce calcul est comparé avec la clé de fabrication dans une zone secrète de la mémoire, et en ce que le support est invalidé si le résultat du calcul et la clé de fabrication sont différents.

12. Procédé selon la revendication 11, caractérisé en ce que la clé de fabrication (F) est fonction d'une donnée secrète (S) mémorisée dans la zone secrète (Z1) du support.

13. Procédé selon l'une des revendications 11 ou 12, caractérisé en ce que la clé de fabrication (F) est calculée à l'aide d'un algorithme (P) enregistré dans les circuits de traitement du support.

**Patentansprüche**

1. Verfahren zur kundenspezifischen Ausbildung wenigstens eines tragbaren Trägers wie etwa einer genormten Karte mit elektronischen Mikroschaltungen, der wenigstens zwei Speicherbereiche unterschiedlicher Natur umfaßt, wobei das Verfahren das Einschreiben von kundenspezifischen Informationen in jeden Bereich umfaßt, um gleichzeitig die den Träger ausgebende Organisation und ihre künftigen Benutzer zu identifizieren und um die Benutzungsbedingungen und -beschränkungen dieser Träger festzulegen, dadurch gekennzeichnet, daß es umfaßt:
—Erstellung einer Zentralkartei, worin n Gruppen von kundenspezifischen Informationen, die entsprechend n Benutzern zugeteilt werden können, aufgenommen werden;
—Lesen der ersten Gruppe von Informationen und Zuordnen dieser Gruppe an einen ersten kundenspezifisch auszubildenden Träger;
—Auswählen der in einen der Speicherbereiche dieses ersten Trägers einzuschreibenden Informationen aus dieser Gruppe; und
—Füllen dieses Bereichs, indem in ihn diese Informationen eingeschrieben werden;
—daß es zum Schreiben der Informationen eines jeden anderen Bereichs eines Trägers das Wiederlesen eines bereits gefüllten Bereiches des Trägers, das Wiederauffinden der diesem Träger zugeordneten Gruppe von Informationen in der Zentralkartei mit Hilfe dieser wiedergelesenen Information, das Auswählen dieser Informationen aus dieser Gruppe, um sie in einen anderen Bereich einzuschreiben, und das Einschreiben dieser ausgewählten Informationen umfaßt; und
—daß für die (n−1) anderen Gruppen von Informationen, die den (n−1) anderen Trägern zugeordnet sind, von vorne begonnen wird.

2. Verfahren gemäß Anspruch 1, dadurch gekennzeichnet, daß es die kundenspezifische Ausbildung des gesamten Trägers umfaßt, indem jeder den in ihm enthaltenen Speicherbereiche gefüllt wird, bevor zur kundenspezifischen Ausbildung eines weiteren Trägers weitergegangen wird.

3. Verfahren gemäß Anspruch 1, dadurch gekennzeichnet, daß es das Füllen eines ersten Bereichs eines jeden der n Träger, dann eines zweiten Bereichs eines jeden der n Träger und so nacheinander eines jeden Bereichs umfaßt, bis sämtliche Bereiche eines jeden Trägers mit den Informationen, die sie enthalten sollen, gefüllt sind.

4. Verfahren gemäß einem der Ansprüche 1 bis 3, dadurch gekennzeichnet, daß es mit Hilfe einer einzigen Maschine bewerkstelligt wird, die eine Anzahl von Arbeitsstationen aufweist, die der Anzahl der Speicherbereiche eines jeden Trägers entsprechen.

5. Verfahren gemäß einem der Ansprüche 1 bis 3, dadurch gekennzeichnet, daß es mit Hilfe mehrerer Maschinen bewerkstelligt wird.

6. Verfahren gemäß einem der Ansprüche 1 bis 5, dadurch gekennzeichnet, daß einer der Speicherbereiche ein elektronischer Speicher (5) ist.

7. Verfahren gemäß Anspruch 6, dadurch gekennzeichnet, daß der Speicher (5) mit den in den Träger eingebauten Verarbeitungsschaltungen (4) verbunden ist.

8. Verfahren gemäß einem der Ansprüche 1 bis 5, dadurch gekennzeichnet, daß einer der Speicherbereiche eine Magnetspur (2) ist.

9. Verfahren gemäß einem der Ansprüche 1 bis 5, dadurch gekennzeichnet, daß einer der Speicherbereiche vom Kartenkörper (1) gebildet wird, in den die für ihn bestimmten kundenspezifischen Informationen mittels Prägen und/oder Drucken eingeschrieben werden.

10. Verfahren gemäß einem der Ansprüche 1 bis 5, dadurch gekennzeichnet, daß einer der Speicherbereiche eine vorbehandelte Oberfläche des Kartenkörpers (1) ist, in die die für ihn bestimmten Informationen mittels eines optischen Verfahrens eingeschrieben werden.

11. Verfahren gemäß einem der Ansprüche 6 oder 7, dadurch gekennzeichnet, daß nach der Herstellung eines jeden Trägers in einer erste Zone (Z2) des elektronischen Speichers (5) eine Serien- oder Herstellungsnummer (X) eingeschrieben wird, daß aus der Seriennummer ein geheimer Herstellungsschlüssel (F) so errechnet wird, daß er für jeden Träger spezifisch ist, und in eine Geheimzone (Z1) des Speichers (5) eingeschrieben wird, daß vor dem Einschreiben der kundenspezifischen Daten in den elektronischen Speicher eine Berechnung ausgeführt wird, die die gleichen Parameter wie diejenigen, die für die Errechnung des Herstellungsschlüssels (F) verwendet worden sind, berücksichtigt, daß das Ergebnis dieser Berechnung mit dem in einer Geheimzone des Speichers befindlichen Herstellungsschlüssel verglichen wird und daß der Träger ungültig gemacht wird, wenn das Ergebnis der Berechnung und der Herstellungsschlüssel voneinander verschieden sind.

12. Verfahren gemäß Anspruch 11, dadurch gekennzeichnet, daß der Herstellungsschlüssel (F) von Geheimdaten (S) abhängt, die in der Geheimzone (Z1) des Trägers gespeichert sind.

13. Verfahren gemäß einem der Ansprüche 11 oder 12, dadurch gekennzeichnet, daß der Herstellungsschlüssel (F) mit Hilfe eines Algorithmus (P) berechnet wird, der in den Verarbeitungsschaltungen des Trägers gespeichert ist.

## Claims

1. A method of personalizing at least one portable carrier such as a standardized card having electronic microcircuits comprising at least two storage media of different nature, of the kind consisting of inscribing in each medium personalizing data allowing the organization issuing the carriers and their future users to be identified at the same time, and the conditions and limits of utilization of these carriers to be fixed, characterized in that it consists in:

—constituting a central file grouping together n groups of personalizing data attributable respectively to n users;

—reading the first group of data and associating it with a first carrier to be personalized;

—extracting from this group the data to be inscribed in one of the storage media of this first carrier;

—charging this medium by inscribing the said data therein;

—and in that, for the purpose of writing the data of each other medium of a carrier, it consists in reading the data of an already charged medium of the carrier, in detecting, in the central file, by means of these re-read data, the group of data associated with this carrier, in extracting therefrom the data to be entered in another medium and in inscribing the said data extracted;

—and in restarting the procedure for the (n−1) other groups of data associated with the (n−1) other carriers.

2. A method according to claim 1, characterized in that it consists in personalizing the whole of a carrier, by charging each of the storage media it comprises, before proceeding with the personalization of another carrier.

3. A method according to claim 1, characterized in that it consists in charging a first medium of each of the *n* carriers, then a second medium of each of the *n* carriers and so on in sequence until all the media of each carrier are charged with the data they should contain.

4. A method according to any one of the claims 1 to 3, characterized in that it is applied by means of a single machine comprising a number of work stations corresponding to the number of storage media of each carrier.

5. A method according to one of the claims 1 to 3, characterized in that it is implemented by means of several machines.

6. A method according to any one of the claims 1 to 5, characterized in that one of the storage media is an electronic memory (5).

7. A method according to claim 6, characterized in that the memory (5) is associated with processing circuits (4) incorporated on the carrier.

8. A method according to any one of the claims 1 to 5, characterized in that one of the storage media is a magnetic track (2).

9. A method according to any one of the claims 1 to 5, characterized in that one of the storage media is the body (1) of the card on which the personalizing data intended for the same are inscribed by stamping and/or by embossing.

10. A method according to any one of the claims 1 to 5, characterized in that one of the storage media is a preprocessed surface of the body (1) of the card, on which the data intended for the same are inscribed by an optical process.

11. A method according to one of the claims 6 or 7, characterized in that a serial or production number (X) is inscribed during the production of each carrier, in a first zone (Z2) of the electronic memory (5), and that a secret production key (F) is calculated from the serial number in such manner as to be specific for each carrier and is inscribed in a secret zone (Z1) of the memory (5), and in that before inscribing the personalizing data of the electronic memory, a calculation is performed taking into account the same parameters as those used for calculation of the production key (F), and that the result of this calculation is compared with the production key in a secret zone of the memory, and in that the carrier is invalidated if the calculation result and the production key are different.

12. A method according to claim 11, characterized in that the production key (F) is a function of a secret data (5) stored in the secret zone (Z1) of the carrier.

13. A method according to one of the claims 11 or 12, characterized in that the production key (F) is calculated by means of an algorithm (P) recorded in the processing circuits of the carrier.

FIG.1

FIG.2

FIG.3

EP 0 207 115 B1

FIG.4